(19) Europäisches Patentamt
European Patent Office
Office européen des brevets

(11) EP 0 628 525 B1

# (12) EUROPÄISCHE PATENTSCHRIFT

(45) Veröffentlichungstag und Bekanntmachung des Hinweises auf die Patenterteilung:
**28.08.1996 Patentblatt 1996/35**

(51) Int. Cl.[6]: **C04B 35/56**, C04B 35/58, C04B 35/563

(21) Anmeldenummer: **94108866.8**

(22) Anmeldetag: **09.06.1994**

## (54) Verbundwerkstoffe auf der Basis von Borcarbid, Titanborid und elementarem Kohlenstoff sowie Verfahren zu ihrer Herstellung

Composites based on boron carbide, titanium boride and elemental carbon and method of their production

Composites à base de carbure de bore, borure de titane et carbone élémentaire et procédé de leur fabrication

(84) Benannte Vertragsstaaten:
**CH DE FR GB IT LI SE**

(30) Priorität: **11.06.1993 DE 4319460**

(43) Veröffentlichungstag der Anmeldung:
**14.12.1994 Patentblatt 1994/50**

(73) Patentinhaber: **Elektroschmelzwerk Kempten GmbH**
**D-81737 München (DE)**

(72) Erfinder:
- **Sigl, Lorenz, Dr.**
  **A-6600 Lechaschau (AT)**
- **Thaler, Hubert**
  **D-87437 Kempten (DE)**
- **Schwetz, Karl-Alexander, Dr.**
  **D-87477 Sulzberg (DE)**

(56) Entgegenhaltungen:
**WO-A-88/08328** **US-E- 23 789**

EP 0 628 525 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.13.4/3.4

## Beschreibung

Die Erfindung betrifft Verbundwerkstoffe auf der Basis von Borcarbid, Titandiborid und elementarem Kohlenstoff sowie Verfahren zu ihrer Herstellung

Borcarbid ist ein Werkstoff, der sich durch hohe Härte und einen hohen Widerstand gegen abrasiven Verschleiß auszeichnet, und deshalb eine weite Verbreitung in Anwendungen gefunden hat, wo hoher Abrasionswiderstand gefordert wird, z.B. für Sandstrahldüsen. Borcarbid besitzt jedoch den Nachteil hoher Sprödigkeit. Von reinem Borcarbid ist bekannt, daß es drucklos nur durch Zusatz kohlenstoffhaltiger Sinterhilfsmittel auf Dichten > 95% der theoretischen Dichte (TD) des Werkstoffs gesintert werden kann. Freier Kohlenstoff ist deshalb in allen drucklos gesinterten, monolithischen Borcarbid-Keramiken ein unvermeidbarer Gefügebestandteil. Dieser Gefügebestandteil wirkt ähnlich wie fein verteilte Porosität und beeinflußt daher die mechanischen Eigenschaften des Sinterkörpers, insbesondere die Härte, negativ. Er ist deshalb unerwünscht.

Mit geringen Mengen an freiem Kohlenstoff weist ein Borcarbid-Werkstoff nur eine geringe Verschleißfestigkeit auf. Borcarbid-Werkstoffe mit weniger als 8 Gew.-% elementarem Kohlenstoff werden im folgenden als selbstgebundenes Borcarbid bezeichnet. Bei einem freien Kohlenstoffgehalt von z.B. 3 Gew.-% weist dieser Werkstoff eine Bruchzähigkeit von ca. 2.3 $MPa\sqrt{m}$ auf (gemessen nach der Brückenmethode). Selbstgebundenes Borcarbid hat sich deshalb für Anwendungen, in denen der Widerstand gegen Prallverschleiß eine Rolle spielt bisher nicht durchsetzen können. Der Umstand begrenzter Verschleißfestigkeit bei schlagendem Verschleiß liegt in erster Linie in der mangelhaften Zähigkeit von selbstgebundenem Borcarbid begründet. Deshalb hat man versucht, diesen Werkstoff, wie andere spröde monolithische Keramiken auch, durch Fremdbindung, z.B. durch die Dispergierung von partikelförmigen Hartstoffen zu verstärken. Diese Partikelverstärkung ist eine bekannte Methode, um die Zähigkeit spröder keramischer Werkstoffe zu steigern.

So ist aus EP 94 591 (entspricht US 4.524.138) bekannt, Borcarbid durch den Zusatz von Partikeln aus geeigneten Hartstoffphasen zäher zu machen. Diese Schrift beschreibt polykristalline Sinterkörper aus Borcarbid mit Zusätzen von $\alpha$-SiC und freiem Kohlenstoff, die sowohl die Zähigkeit als auch die Festigkeit von reinem Borcarbid deutlich übertreffen. In ähnlicher Weise wie Siliciumcarbid können auch andere mit Borcarbid im Gleichgewicht stehende Hartstoffe zur Verbesserung der mechanischen Eigenschaften von Borcarbid herangezogen werden.

Als besonders geeignet für den Zweck der Partikelverstärkung von Borcarbid haben sich Boride, im speziellen die Boride der Übergangselemente der Gruppen IVa bis VIa des Periodensystems erwiesen. Formkörper mit verbesserter Verschleißfestigkeit durch die Kombination von Borcarbid mit einem schwer schmelzbaren Metallborid werden in DE 2.451.774 (entspricht GB 1.479.589) beschrieben. Während die in DE 2.451.774 genannten Partikelverbundwerkstoffe durch die Mischung der gewünschten Hartstoffphasen und anschließendes Sintern entstehen, sind auch Verfahren beschrieben worden, bei denen die gewünschte Phasenzusammensetzung des Werkstoffs erst durch eine geeignete Reaktion der Ausgangsstoffe vor der Sinterung entsteht.

Ein solches Verfahren zur Herstellung eines partikelverstärkten Verbundwerkstoffs aus Borcarbid und borreichen Übergangsmetallboriden, insbesondere Diboriden, ist in US 2.613.154 offengelegt. Dieses Patent beschreibt Formkörper, die aus Borcarbid und mehr als 50 Vol-% eines Borids der Gruppe $TiB_2$, $VB_2$, $CrB_2$, $ZrB_2$, $NbB_2$, $Mo_2B_5$, $W_2B_5$, $HfB_2$ und $TaB_2$ bestehen. Gemäß der Reaktion

$$(1+x)B_4C+2Me \dashrightarrow xB_4C+2MeB_2+C \qquad (1)$$

entsteht aus einem geeigneten Metall und Borcarbid ein Metallborid, ein geeignet erscheinender Anteil an unreagiertem Borcarbid sowie freier Kohlenstoff. Auch in boridpartikelverstärkten Borcarbid-Keramiken wird freier Kohlenstoff als unerwünschter Gefügebestandteil betrachtet. So fordert US 2.613.154 daß der Gewichtsanteil an freiem Kohlenstoff weniger als 2% bezogen auf den Gewichtsanteil Borcarbid ausmachen muß (siehe Anspruch 1, Spalte 11, Zeilen 46 bis 48). Um die Menge an freiem Kohlenstoff durch Reaktion (1) möglichst gering zu halten, wird die Verwendung von borreichem Borcarbid empfohlen. Zum Beispiel wird in Zeilen 40-43, Spalte 3 die Verwendung von Borcarbid mit 83 Gew.-% Boranteil beschrieben. Diese Maßnahme ist möglich, weil Borcarbid einen breiten Homogenitätsbereich besitzt, der zwischen den Zusammensetzungen $B_{4.33}C$ und $B_{10.5}C$ variiert.

Ein anderes Verfahren zur Herstellung eines partikelverstärkten Verbundwerkstoffs aus Borcarbid und geeigneten Boriden, insbesondere Diboriden, wird in EP 343.873 offengelegt. Dort werden dem Borcarbid ein geeigneter titanhaltiger Stoff wie z.B. Titanoxid, Titannitrid, Titancarbid, oder metallisches Titan und ggf. ein kohlenstoff- oder wasserstoffhaltiges Reduktionsmittel zugesetzt, die mit Borcarbid unter Bildung von Titandiborid und Kohlenmonoxid z.B. gemäß

$$(1+x)B_4C+2TiO_2+3C \dashrightarrow xB_4C+2TiB_2+4CO \qquad (2)$$

unter Bildung des gewünschten Borids reagieren. Nach der Reaktion entsteht durch Sintern ein dichter Formkörper aus Borcarbid und Titandiborid.

Ein weiteres Verfahren zur Herstellung boridhaltiger Borcarbid Werkstoffe, bei dem durch Zusatz von Wolframcarbid bzw. Titancarbid durch Reaktionssintern gemäß den Reaktionsgleichungen

$$B_4C+2TiC \dashrightarrow 3C+2TiB_2 \quad (3)$$

$$5B_4C+8WC \dashrightarrow 8C+4W_2B_5 \quad (4)$$

die Boride $W_2B_5$ bzw. $TiB_2$ entstehen, wird in US 4.670.408 beschrieben. Auch in dieser Schrift (siehe Spalte 2, Zeilen 35 bis 39) wird gefordert, den freien Kohlenstoff, der gemäß den Reaktionsgleichungen (3) und (4) entsteht, durch Zugabe von elementarem Bor in Form von Borcarbid durch die Reaktion

$$C+4B \dashrightarrow B_4C \quad (5)$$

abzubinden, um so seine schädliche Wirkung zu vermeiden.

Auch H. Hofmann und G. Petzow haben festgestellt (Journal of the Less-Common Metals, Band 117, S. 121-127, 1986), daß optimale Festigkeit nur dann erzielt wird, wenn mit $W_2B_5$ und $TiB_2$ verstärkte Borcarbid-Keramiken keinen freien Kohlenstoff mehr enthalten.

Übereinstimmend wird in diesen Schriften sowie in zahlreichen anderen Veröffentlichungen (siehe beispielsweise R. Telle und G. Petzow, Proceedings of the 9th Int. Symposium on Boron, Borides and Related Compounds, Duisburg 1987, S. 234-244, und R. Telle, G. Petzow, J. Adlerborn und K. Weiss, ibid., S. 453-54) beschrieben, daß Boridpartikel die Sinterfähigkeit von reinem Borcarbid ebenso wie seine Festigkeit und Zähigkeit signifikant verbessern, daß aber freier Kohlenstoff in den Sinterkörpern bevorzugt zu vermeiden ist. Somit hat man bisher den freien Kohlenstoff in boridverstärkten Borcarbid-Werkstoffen als unerwünscht und schädlich für die Eigenschaften dieser Werkstoffe erachtet, und aus diesem Grund freien Kohlenstoff in den genannten Verbundwerkstoffen möglichst vermieden.

Aufgabe der Erfindung war es, zähe, feste und harte Verbundwerkstoffe auf Basis Borcarbid, Titandiborid und freiem Kohlenstoff sowie Verfahren zu ihrer Herstellung zur Verfügung zu stellen.

Die Aufgabe wird gelöst durch Verbundwerkstoffe enthaltend Borcarbid und Titandiborid in einem Volumenverhältnis $B_4C/TiB_2$ von 90:10 bis 10:90 Teilen und einen Anteil an elementarem Kohlenstoff größer 2 Gew.% bis maximal 50 Gew.% bezogen auf den Borcarbidanteil.

Bevorzugt enthalten die erfindungsgemäßen Werkstoffe Borcarbid und Titandiborid in einem Volumenverhältnis $B_4C/TiB_2$ von 90:10 bis 40:60 Teilen und einen Anteil an elementarem Kohlenstoff größer 2 Gew.% bis maximal 20 Gew.% bezogen auf den Borcarbidanteil.

Besonders bevorzugt enthalten die erfindungsgemäßen Werkstoffe Borcarbid und Titandiborid in einem Volumenverhältnis $B_4C/TiB_2$ von 90:10 bis 60:40 Teilen und einen Anteil an elementarem Kohlenstoff größer 2 Gew.% bis maximal 10 Gew.% bezogen auf den Borcarbidanteil.

Überraschenderweise wurde in der vorliegenden Erfindung festgestellt, daß die mechanischen Eigenschaften von Borcarbid-Titandiborid-Werkstoffen, die Borcarbid und Titandiborid in einem beliebigen Volumenverhältnis von 90:10 bis 10:90 Teilen enthalten, durch Zusatz von freiem Kohlenstoff in Mengen größer zwei bis maximal 50 Gew.% erheblich verbessert werden.

Insbesondere ist die Bruchzähigkeit $K_{IC}$ und die Festigkeit der erfindungsgemäßen kohlenstoffhaltigen Borcarbid-$TiB_2$-Werkstoffe gegenüber bekannten Werkstoffen signifikant erhöht.

Die erfindungsgemäßen Werkstoffe besitzen eine Dichte von mindestens 92% TD, eine Härte HK 0,1 größer 2300, eine Biegebruchfestigkeit von mindestens 400 MPa (gemessen mit einer Biegeprobe der Abmessungen 4x3x45 $mm^3$ nach der Vierpunktmethode bei Raumtemperatur, innerer Auflagerabstand 20 mm, äußerer Auflagerabstand 40 mm) und eine Bruchzähigkeit (gemessen nach der Brückenmethode mit Biegeproben der o.g. Geometrie) von mindestens 3,5 $MPa\sqrt{m}$.

Gegebenenfalls können die erfindungsgemäßen Sinterkörper geringe Mengen metallischer oder nichtmetallischer Verunreinigungen von insgesamt < 1 Gew.-% enthalten, die von der Herstellung her oder als Mahlabrieb in den als Ausgangsmaterial verwendeten Pulvermischungen vorhanden sind.

Die erfindungsgemäßen Borcarbid-$TiB_2$-C-Verbundwerkstoffe werden durch druckloses Festphasensintern und eine ggf. anschließende heißisostatische Nachverdichtung hergestellt.

Das erfindungsgemäße Herstellungsverfahren ist dadurch gekennzeichnet, daß

(1) feinteilige Pulver aus Borcarbid und Titandiborid im Volumenverhältnis $B_4C/TiB_2$ von 90:10 bis 10:90 Teilen mit einem Kohlenstoff enthaltenden Zusatz in Form von feinteiligem Kohlenstoff und/oder einem bei Temperaturen bis 1200°C unter Bildung von Kohlenstoff verkokbaren, organischen Material und/oder Titancarbid homogen vermischt werden,

(2) diese Mischung zu Grünkörpern einer Dichte von mindestens 50 %TD geformt wird,

(3) ggf. je nach dem eingesetzten, Kohlenstoff enthaltenden Zusatz der so gebildete Grünling zur Erzeugung des freien Kohlenstoffs erhitzt wird,

(4) der so behandelte Grünkörper unter Ausschluß von Sauerstoff bei Temperaturen von 2100 bis 2250°C zu Körpern mit einer Dichte von mindestens 92% TD drucklos gesintert wird.

Der freie Kohlenstoff wird vorzugsweise in einer Menge größer 2 bis 50 Gew.-% freien Kohlenstoffs, bezogen auf den Borcarbidanteil der Ausgangspulvermischung, eingesetzt. Er wird durch folgende Varianten des erfindungsgemäßen Verfahrens in den Verbundwerkstoff eingebracht:

(a) wenn der Kohlenstoffträger in die Ausgangspulvermischung als amorpher Kohlenstoff z.B. in Form von Ruß eingebracht wird, entfällt Schritt (3) des oben beschriebenen erfindungsgemäßen Verfahrens, da der freie Kohlenstoff bereits in den Grünling über die Pulvermischung eingebracht wurde.

(b) wenn der Kohlenstoffträger in die Ausgangspulvermischung als Kohlenstoff in organisch gebundener Form eingebracht wird, erfolgt die Umwandlung dieser organischen Kohlenstoffträger in freien Kohlenstoff in Schritt (3) des erfindungsgemäßen Verfahrens durch eine Pyrolyse unter Luftabschluß. Beispiele für solch organischen Kohlenstoffträger sind z.B. Wachse, Harze, Preßhilfsmittel oder Zucker.

(c) wenn der Kohlenstoffträger in die Ausgangspulvermischung als Titancarbid in Pulverform eingebracht wird, erfolgt die Bildung des freien Kohlenstoffs in Schritt (3) des oben beschriebenen erfindungsgemäßen Verfahrens durch eine Reaktion des Titancarbids mit Borcarbid gemäß

$$B_4C + 2TiC \dashrightarrow 3C + 2TiB_2 \qquad (6)$$

Für die Durchführung des erfindungsgemäßen Verfahrens wird als Ausgangsmaterial vorteilhaft ein Borcarbidpulver mit einer Reinheit von mindestens 98,5 Gewichtsprozent verwendet, worunter zu verstehen ist, daß die Analysensumme von Bor und Kohlenstoff mindestens 98,5 Gewichtsprozent beträgt, bei einem B : C-Atomverhältnis im Bereich von 3,5 bis 4,5 : 1. Metallische Verunreinigungen können insgesamt bis zu 0,5 Gewichtsprozent toleriert werden. Der noch verbleibende Differenzbetrag bis zu 100 Gewichtsprozent verteilt sich auf Sauerstoff und Stickstoff in Form von anhaftendem Boroxid und Bornitrid, wobei die Analysensumme von Sauerstoff + Stickstoff < 1 Gewichtsprozent ist. Als Maß für die erforderliche Kornfeinheit werden zweckmäßig die spezifische Oberfläche (gemessen nach der BET-Methode) und die Korngröße, gemessen nach der FSSS-Methode herangezogen.

Das verwendete Borcarbidpulver kann amorph oder kristallin sein, es kann direkt durch Abscheidung aus der Gasphase, beispielsweise aus Borhalogeniden oder Boranen und gasförmigen Kohlenwasserstoffen gewonnen werden. Aus wirtschaftlichen Gründen ist es indessen vorteilhaft, von grobkörnigem, kristallinem Borcarbid auszugehen, das großtechnisch beispielsweise nach dem Schmelzreduktionsverfahren von Borsäure durch Kohlenstoff im elektrischen Ofen hergestellt worden ist. Dieses wird zunächst einer Intensivmahlung auf Korngrößen von etwa 3 µm und feiner unterzogen und daraus anschließend nach üblichen bekannten Verfahren, wie Windsichten oder Schlämmen das Pulver mit der gewünschten spezifischen Oberfläche abgetrennt.

Für die Durchführung des erfindungsgemäßen Verfahrens wird als Borcarbidausgangsmaterial vorteilhaft ein Pulver mit einer spezifischen Oberfläche gemessen nach BET von 5 bis 50 $m^2/g$, insbesondere 10 bis 20 $m^2/g$ eingesetzt. Solche Pulver sind käuflich erhältlich oder lassen sich durch Aufmahlen in bekannter Weise aus käuflichen Pulvern herstellen.

Das als Ausgangsmaterial verwendete Titandiborid wird vorteilhaft mit einer mittleren Teilchengröße nach FSSS von < 6 µm vorzugsweise < 3 µm und einer spezifischen Oberfläche gemessen nach BET von größer 0,5 $m^2/g$, insbesondere größer 1 $m^2/g$ eingesetzt. Aus wirtschaftlichen Gründen besonders geeignet sind handelsübliche $TiB_2$-Pulver ausreichender Feinheit.

Der Kohlenstoff enthaltende Zusatz kann in jeder Form verwendet werden, die eine gleichmäßige Verteilung in der hochdispersen Mischung gewährleistet, z.B. als partikulärer Ruß oder kolloidaler Graphit mit einer spezifischen Oberfläche nach BET im Bereich von 10 bis 400 $m^2/g$. Zur Erzielung guter Preßeigenschaften der Ruß oder kolloidalen Graphit enthaltenden Pulvergemische werden vorteilhaft geringe Mengen eines temporären Bindemittels und/oder Gleitmittels mitverwendet. Beispiele für derartige temporäre Bindemittel sind Polyvinylalkohol und Polystyrol; für die Gleitmittel Stearinsäure, Metallstearate und Polyäthylenglykol. Diese sog. Preßhilfsmittel werden vorzugsweise in Mengen bis zu insgesamt maximal 2 Gew.-% bezogen auf die resultierende Mischung verwendet. Der Kohlenstoff enthaltende Zusatz kann ebenso in Form eines organischen Materials eingesetzt werden, das bei Temperaturen bis zu etwa 1000°C unter Bildung von Kohlenstoff verkokt werden kann. Beispiele hierfür sind Phenoplaste und Steinkohlenteerpech, wobei sich Phenolformaldehydkondensationsprodukte vom Typ der Novolake und der Resole besonders bewährt haben, die im Bereich von 100-900°C unter Bildung von amorphem Kohlenstoff in etwa 35-50%iger Ausbeute zersetzt werden.

Wenn als Kohlenstoff enthaltender Zusatz Titancarbid verwendet wird, so wird dieses vorteilhaft mit einer mittleren Teilchengröße nach FSSS von < 5 µm vorzugsweise < 2 µm und einer spezifischen Oberfläche gemessen nach BET von größer 0,5 $m^2/g$, insbesondere größer 1 $m^2/g$ eingesetzt. Aus wirtschaftlichen Gründen besonders geeignet sind handelsübliche TiC-Pulver ausreichender Feinheit.

Bei der Einstellung des gewünschten Kohlenstoffgehaltes im Endprodukt über die Menge des Kohlenstoff enthaltenden Zusatzes im Ausgangsgemisch ist der in den Titancarbid- und Borcarbidausgangspulvern ggf. vorhandene freie Kohlenstoff zu berücksichtigen. Bei der Durchführung des erfindungsgemäßen Verfahrens wurde nämlich überraschenderweise festgestellt, daß nicht nur von hochreinen und dadurch meist kostspieligen Carbidpulvern ($C_{frei}$-Gehalt<0,1 Gew.-%), sondern auch von technisch reinen, d.h. kohlenstoffreicheren Carbidpulvern ($C_{frei}$-Gehalt bis zu etwa 1 Gew.-%) ausgegangen werden kann.

Die Durchführung des erfindungsgemäßen Verfahrens erfolgt bevorzugt folgendermaßen:

Das Titandiborid und das Borcarbidpulver werden mit dem Kohlenstoff enthaltenden Zusatz homogen vermischt, was vorteilhaft dadurch erreicht wird, daß der Kohlenstoff-Zusatz in einem Lösungsmittel gelöst bzw. dispergiert und das Gemenge aus den Carbid/Boridpulvern in der Lösung dispergiert wird. Bei Einsatz von freiem Kohlenstoff per se werden die Borid/Carbid-Pulvermischungen gemeinsam mit dem elementaren Kohlenstoff in einer Lösung eines temporären Bindemittels und/oder Gleitmittels dispergiert. Als Lösungsmittel können beispielsweise Aceton oder niedere aliphatische Alkohole mit 1 bis 6 Kohlenstoffatomen Verwendung finden. Bevorzugt wird Wasser als Lösungsmittel verwendet. Das Dispergieren kann durch mechanische Bewegung einer dünnflüssigen Suspension in Plastikbehältern unter Verwendung eines Rührers oder durch Kneten einer dickflüssigen Suspension in einer Knetvorrichtung vorgenommen werden. Dann wird das Lösungsmittel entfernt, beispielsweise bei einer dünnflüssigen Suspension durch Sprühtrocknung oder bei einer dickflüssigen Suspension durch Abdunsten während des Knetvorganges.

Da für die meisten Formgebungsverfahren - insbesondere für das automatische Pressen - ein gut rieselfähiges Pulver mit niedrigem Schüttvolumen benötigt wird, kann die hochdisperse Pulvermischung vor der Formgebung noch einer Granulationsstufe zur Bildung möglichst weicher, preßinstabiler und freifließender Agglomerate unterzogen werden. Diese Granulationsstufe kann entfallen, wenn beispielsweise zur Formgebung nach dem Spritzgußverfahren das Pulver mit rund 40 Vol.-% Gleit- und Bindemittel zu einer plastifizierbaren Masse weiterverarbeitet wird.

Die Formgebung zur Bildung der vorgeformten Grünkörper mit einer Dichte von mindestens 50% TD kann mittels üblicher bekannter Maßnahmen vorgenommen werden, beispielsweise durch Gesenkpressen, isostatisches Pressen, Spritzgießen, Strangpressen oder Schlickergießen. Beim Gesenkpressen in Matrizen, bzw. beim isostatischen Pressen wird üblicherweise ein Druck von 30-600, vorzugsweise zwischen 100 bis 500 MPa, angewendet.

Wenn in der Ausgangspulvermischung Preß- und Bindemittel vorhanden sind, können diese, falls gewünscht, vor dem Sintern durch eine separate Glühbehandlung z.B. bei Temperaturen von ca. 400°C wieder entfernt werden.

Falls Kohlenstoff in Form eines organischen Kohlenstoffträgers in der Ausgangspulvermischung vorhanden ist, werden die Grünkörper unter Ausschluß von Sauerstoff in einem Vakuumofen auf Temperaturen im Bereich zwischen 600 und 1200°C erhitzt, wobei der organische Kohlenstoffträger unter Zurücklassung von amorphem Kohlenstoff pyrolysiert.

Wenn Kohlenstoff über Titancarbid eingebracht wird, erhitzt man die Grünkörper unter Ausschluß von Sauerstoff in einem Vakuumofen auf Temperaturen im Bereich zwischen 1000 und 1500°C, vorzugsweise zwischen 1250 und 1400°C, und hält bei dieser Temperatur 10 bis 600 min., vorzugsweise 30 bis 180 min., wobei TiC mit einem Teil des Borcarbid zu freiem Kohlenstoff und Metallborid reagiert. Bei Verwendung eines Gemenges der verschiedenen Kohlenstoffträger sollte bevorzugt jeder der entsprechenden Verfahrensschritte durchgeführt werden.

Anschließend werden die Körper in einem Sinterofen unter Ausschluß von Sauerstoff auf Temperaturen im Bereich zwischen 2100 und 2250°C, vorzugsweise zwischen 2125 und 2200°C, besonders bevorzugt zwischen 2140 und 2175°C, erhitzt und bei dieser Temperatur 10 bis 600 min., vorzugsweise 30 bis 300 min., besonders bevorzugt 90 bis 150 min., gehalten und schließlich langsam auf Raumtemperatur abgekühlt.

Nachdem durch Sintern der Zustand geschlossener Porosität (Dichte > 92%TD) erreicht wurde, können die Sinterkörper, zur Erreichung höherer Dichten heißisostatisch nachverdichtet werden. Dies erfolgt, bevorzugt vor dem Abkühlen auf Raumtemperatur, durch Anwendung von Druck mittels eines gasförmigen Druckübertragungsmediums, wie etwa Argon, bei Temperaturen zwischen 1900 und 2150°C unter einem Druck von 5 bis 200 MPa für die Dauer von 5 bis 60 min. beispielsweise in einem Hochdruckautoklaven. Durch diese hüllenlose heißisostatische Nachverdichtung wird der Großteil der noch vorhandenen Poren eliminiert, so daß der Werkstoff danach eine Dichte > 98% seiner theoretischen Dichte aufweist.

Wenn der Werkstoff einer heißisostatischen Nachverdichtung unterzogen wurde, besitzt er eine Härte HK 0,1 größer 2500, eine Biegebruchfestigkeit von mindestens 500 MPa (gemessen mit einer Biegeprobe der Abmessungen 4x3x45 $mm^3$ nach der Vierpunktmethode bei Raumtemperatur, innerer Auflagerabstand 20 mm, äußerer Auflagerabstand 40 mm) und eine Bruchzähigkeit (gemessen nach der Brückenmethode mit Biegeproben der o.g. Geometrie) von mindestens 3,5 $MPa\sqrt{m}$.

Die erfindungsgemäßen Verbundwerkstoffe eignen sich unter anderem zur Herstellung von Werkzeugen zur spanabhebenden Bearbeitung von Nichteisenmetallen, Holz, Kunststoff und keramischen Grünkörpern, insbesondere Schneidwerkzeugen für Nichteisenmetalle, insbesondere für Aluminiumlegierungen, Schneidwerkzeugen für keramische Grünkörper, Schneidwerkzeugen für Holz, oder Schneidwerkzeugen für faserverstärkte Kunststoffe. Die Verbundwerkstoffe finden insbesondere auch Verwendung bei der Herstellung von verschleißfesten Bauteilen wie beispielsweise Sandstrahldüsen, Wasserstrahldüsen, Schleuderradschaufeln oder Mühlenrotoren.

Die folgenden Beispiele dienen der weiteren Erläuterung der Erfindung.

Tabelle 1 gibt die Korngröße und Zusammensetzung der in den Beispielen verwendeten Borcarbid-, Titandibord-, Titancarbid-, und Bor-Pulver wieder (FSSS = Fisher Sub Sieve Sizer)

Tabelle 1

| Pulver | FSSS µm | BET $m^2/g$ | Ti Gew.-% | B Gew.-% | C Gew.-% | O Gew.-% | N Gew.-% | Fe Gew.-% |
|---|---|---|---|---|---|---|---|---|
| $B_4C$ | -- | 15,5 | -- | 77,1 | 21,0 | 0,9 | 0,4 | -- |
| $TiB_2$ | 0,9 | 2,5 | 66,5 | 30,6 | 0,25 | 2,2 | 0,1 | < 0,2 |
| TiC | 1,5 | -- | 80,5 | -- | 19,4 | 0,005 | 0,001 | -- |
| B amorph | 0,9 | -- | -- | 95,8 | -- | 2,3 | -- | |

**Beispiel 1**

563,2 g Borcarbid-Pulver mit einer spezifischen Oberfläche von 15,5 $m^2/g$ (Tabelle 1), 196 g $TiB_2$-Pulver mit einer spezifischen Oberfläche von 2,5 $m^2/g$ (Tabelle 1) und 40,8 g TiC (Tabelle 1) wurden mit 0,5 Gew.% Methylcellulose (Hoechst AG, Frankfurt), 1 Gew.% Polyethylenglykol 4000 (Hoechst AG, Frankfurt), 3 Gew.% Mineralölester (Hoechst AG, Frankfurt), als Gleit- und Preßhilfsmitteln versetzt und in 1 $dm^3$ destilliertem Wasser in einer Planetenkugelmühle 1 Stunde lang bei 120 U/min. vermahlen. Das Pulvergemisch wurde im Rotationsverdampfer getrocknet und anschließend in einer Rotormühle entagglomeriert. Dieses Pulver wurde anschließend bei einem Druck von 200 MPa kaltisostatisch zu Platten der Größe 60x20x20 $mm^3$ mit einer Gründichte 1,65 $g/cm^3$ verpreßt.

Die Grünkörper wurden in 1 h von Raumtemperatur auf 1250°C erhitzt, anschließend in 2 h von 1250 auf 1500°C erwärmt und danach mit einer Aufheizgeschwindigkeit von 700°C/h auf 2175°C erhitzt und bei dieser Temperatur unter einem Druck von 10 mbar Argon für 2h gehalten.

Die Proben wurden anschließend abgekühlt und ihre Dichte zu 97,9% der theoretischen Dichte bestimmt.

Aus den gesinterten Platten wurden Probenkörper hergestellt. Verschiedene Eigenschaftswerte dieser Probenkörper wurden wie folgt bestimmt.

Die Dichte wurde mit dem Auftriebsverfahren gemessen. Die Festigkeit wurde an Biegestäbchen der Dimension 4x3x45 $mm^3$ im Vierpunktbiegeversuch (äußerer Auflagerabstand 40 mm, innerer Auflagerabstand 20 mm) bestimmt. Die Bruchzähigkeit $K_{IC}$ wurde durch Einbringen eines scharfen Anrisses mit der Brückenmethode und einem anschließenden Biegeversuch ermittelt. Die Härte wurde nach Knoop mit einer Eindrucklast von 0,981 N bestimmt. Die Dichte und die gemessenen mechanischen Eigenschaften der Probenkörper sind in Tabelle 2 zusammengefaßt.

Die gesinterten Proben wurden einer chemischen Analyse unterzogen und der Gehalt an B, Ti, O, C und N unter der Annahme bestimmt, daß O als $TiO_2$, N als TiN und Borcarbid als $B_{4,33}C$ vorliegt. Daraus wurde die Phasenzusammensetzung im Sinterkörper und insbesondere der Gehalt an elementarem Kohlenstoff berechnet. Das Verhältnis $C_{frei}/B_{4,33}C$ ist ausgewiesen. Diese Daten sind in Tab. 3 zusammengefaßt.

Ein Teil der Platten wurde bei 2100°C unter einem Druck von 200 MPa Ar heißisostatisch gepreßt. Dabei stieg die Dichte auf 99,8% der theoretischen Dichte an.

Aus den nachverdichteten Platten wurden, wie oben beschrieben, Probenkörper hergestellt und ihre Eigenschaften bestimmt. Die Ergebnisse sind in Tab. 2 und 3 zusammengefaßt.

**Beispiel 2**

393,3 g Borcarbid-Pulver mit einer spezifischen Oberfläche von 15,5 $m^2/g$ (Tabelle 1), 316 g $TiB_2$-Pulver mit einer spezifischen Oberfläche von 2,5 $m^2/g$ (Tabelle 1) und 90,4 g TiC (Tabelle 1) wurden wie in Beispiel 1 beschrieben gemahlen, getrocknet, gepreßt und anschließend gesintert bzw. heißisostatisch gepreßt.

Die Bestimmung der Eigenschaften des Werkstoffs wurden, wie in Beispiel 1 beschrieben, durchgeführt. Die Ergebnisse sind in Tab. 2 und 3 wiedergegeben.

**Beispiel 3**

262,4 g Borcarbid-Pulver mit einer spezifischen Oberfläche von 15,5 $m^2/g$ (Tabelle 1), 414,4 g $TiB_2$-Pulver mit einer spezifischen Oberfläche von 2,5 $m^2/g$ (Tabelle 1) und 123,2 g TiC (Tabelle 1) wurden, wie in Beispiel 1 beschrieben, gemahlen, getrocknet, gepreßt und anschließend gesintert bzw. heißisostatisch gepreßt.

Die Bestimmung der Eigenschaften des Werkstoffs wurden, wie in Beispiel 1 beschrieben, durchgeführt. Die Ergebnisse sind in Tab. 2 und 3 wiedergegeben.

**Beispiel 4**

160,8 g Borcarbid-Pulver mit einer spezifischen Oberfläche von 15,5 $m^2/g$ (Tabelle 1), 488,8 g $TiB_2$-Pulver mit einer spezifischen Oberfläche von 2,5 $m^2/g$ (Tabelle 1) und 150,4 g TiC (Tabelle 1) wurden, wie in Beispiel 1 beschrieben, gemahlen, getrocknet, gepreßt und anschließend gesintert bzw. heißisostatisch gepreßt.

Die Bestimmung der Eigenschaften des Werkstoffs wurden, wie in Beispiel 1 beschrieben, durchgeführt. Die Ergebnisse sind in Tab. 2 und 3 wiedergegeben.

**Beispiel 5**

376 g Borcarbid-Pulver mit einer spezifischen Oberfläche von 15,5 $m^2/g$ (Tabelle 1), 377,6 g $TiB_2$-Pulver mit einer spezifischen Oberfläche von 2,5 $m^2/g$ (Tabelle 1) und 46,4 g TiC (Tabelle 1) wurden, wie in Beispiel 1 beschrieben, gemahlen, getrocknet, gepreßt und anschließend gesintert bzw. heißisostatisch gepreßt.

Die Bestimmung der Eigenschaften des Werkstoffs wurden, wie in Beispiel 1 beschrieben, durchgeführt. Die Ergebnisse sind in Tab. 2 und 3 wiedergegeben.

**Beispiel 6**

369,7 g Borcarbid-Pulver mit einer spezifischen Oberfläche von 15,5 $m^2/g$ (Tabelle 1), 392,8 g $TiB_2$-Pulver mit einer spezifischen Oberfläche von 2,5 $m^2/g$ (Tabelle 1) und 33,6 g TiC (Tabelle 1) wurden, wie in Beispiel 1 beschrieben, gemahlen, getrocknet, gepreßt und anschließend gesintert bzw. heißisostatisch gepreßt.

Die Bestimmung der Eigenschaften des Werkstoffs wurden, wie in Beispiel 1 beschrieben, durchgeführt. Die Ergebnisse sind in Tab. 2 und 3 wiedergegeben.

**Beispiel 7**

12 g Phenolformaldehydharz (Alnovol PN822 Hoechst AG, Frankfurt) wurden in 500 ml Aceton gelöst und zusammen mit 278,8 g Borcarbid-Pulver mit einer spezifischen Oberfläche von 15,5 $m^2/g$ (Tabelle 1), 121,2 g $TiB_2$-Pulver mit einer spezifischen Oberfläche von 2,5 $m^2/g$ (Tabelle 1) in einer Planetenkugelmühle 1 Stunde lang bei 120 U/min. homogenisiert. Das Pulvergemisch wurde im Rotationsverdampfer getrocknet und anschließend in einer Rotormühle entagglomeriert. Dieses Pulver wurde danach bei einem Druck von 200 MPa kaltisostatisch zu Quadern der Größe 60x20x20 $mm^3$ verpreßt. Die Grünkörper wurden in 8 h von Raumtemperatur auf 800°C erhitzt, bei dieser Temperatur 30 min. lang unter strömendem Argon gehalten und dann auf Raumtemperatur abgekühlt (Pyrolyse). Sie wurden danach in einem Sinterofen in 1h von Raumtemperatur auf 1100°C erwärmt, und ab 1100°C mit einer Aufheizgeschwindigkeit von 700°C/h auf 2175°C erhitzt und bei dieser Temperatur unter einem Druck von 10 mbar Argon für 2 h gehalten. Die Proben wurden anschließend abgekühlt und ihre Dichte zu 98,2% der theoretischen Dichte bestimmt. Ein Teil dieser Proben wurde anschließend bei 2100°C unter einem Druck von 200 MPa Ar heißisostatisch gepreßt und dabei stieg die Dichte auf 99,9% der theoretischen Dichte an.

Die Bestimmung der Eigenschaften des Werkstoffs wurden, wie in Beispiel 1 beschrieben, durchgeführt. Die Ergebnisse sind in Tab. 2 und 3 wiedergegeben.

**Beispiel 8**

24 g Phenolformaldehydharz wurden in Aceton gelöst und zusammen mit 278,8 g Borcarbid-Pulver mit einer spezifischen Oberfläche von 15,5 $m^2/g$ (Tabelle 1), 121,2 g $TiB_2$-Pulver mit einer spezifischen Oberfläche von 2,5 $m^2/g$ (Tabelle 1) und 0,5 $dm^3$ Aceton, wie in Beispiel 7 beschrieben, gemahlen, getrocknet, gepreßt und anschließend gesintert bzw. heißisostatisch gepreßt.

Die Bestimmung der Eigenschaften des Werkstoffs wurden, wie in Beispiel 1 beschrieben, durchgeführt. Die Ergebnisse sind in Tab. 2 und 3 wiedergegeben.

**Beispiel 9**

36 g Phenolformaldehydharz wurden in Aceton gelöst und zusammen mit 278,8 g Borcarbid-Pulver mit einer spezifischen Oberfläche von 15,5 $m^2/g$ (Tabelle 1), 121,2 g $TiB_2$-Pulver mit einer spezifischen Oberfläche von 2,5 $m^2/g$ (Tabelle 1) und 0,5 $dm^3$ Aceton, wie in Beispiel 7 beschrieben, gemahlen, getrocknet, gepreßt und anschließend gesintert bzw. heißisostatisch gepreßt.

Die Bestimmung der Eigenschaften des Werkstoffs wurden, wie in Beispiel 1 beschrieben, durchgeführt. Die Ergebnisse sind in Tab. 2 und 3 wiedergegeben.

**Beispiel 10**

150,6 g Borcarbid-Pulver mit einer spezifischen Oberfläche von 15,5 $m^2/g$ (Tabelle 1), 180,4 g $TiB_2$-Pulver mit einer spezifischen Oberfläche von 2,5 $m^2/g$ (Tabelle 1) und 5,0 g Ruß mit einer spezifischen Oberfläche von 100 $m^2/g$ wurden mit 3 Gew.-% Paraffin als Preßhilfsmittel versetzt und in 0,4 $dm^3$ n-Heptan in einer Planetenkugelmühle 1 Stunde lang bei 120 U/min. vermahlen. Das Pulvergemisch wurde im Rotationsverdampfer getrocknet und anschließend in einer Rotormühle entagglomeriert. Dieses Pulver wurde anschließend bei einem Druck von 200 MPa kaltisostatisch zu Quadern der Größe 60x20x20 $mm^3$ verpreßt. Die Grünkörper wurden in einem Sinterofen in 1 h von Raumtemperatur auf 1100°C erwärmt und ab 1100°C mit einer Aufheizgeschwindigkeit von 700°C/h auf 2175°C erhitzt und bei dieser Temperatur unter einem Druck von 10 mbar Argon für 2 h gehalten. Die Proben wurden anschließend abgekühlt und ihre Dichte zu 97,3% der theoretischen Dichte bestimmt. Ein Teil dieser Proben wurde anschließend bei 2100°C unter einem Druck von 200 MPa Ar heißisostatisch gepreßt und dabei stieg die Dichte auf 99,7% der theoretischen Dichte an.

Die Bestimmung der Eigenschaften des Werkstoffs wurden, wie in Beispiel 1 beschrieben, durchgeführt. Die Ergebnisse sind in Tab. 2 und 3 wiedergegeben.

**Vergleichsbeispiel 1**

622,8 g Borcarbid-Pulver mit einer spezifischen Oberfläche von 15,5 $m^2/g$ (Tabelle 1), 270 g $TiB_2$-Pulver mit einer spezifischen Oberfläche von 2,5 $m^{2/g}$ (Tabelle 1) und 7,2 g amorphes Bor (Tabelle 1) wurden in 1 $dm^3$ Aceton in einer Planetenkugelmühle 1 Stunde lang bei 120 U/min. vermahlen. Das Pulvergemisch wurde im Rotationsverdampfer getrocknet und anschließend in eine Graphitmatrize mit 72 mm Innendurchmesser gefüllt. Anschließend wurden 200 g dieses Pulvergemenges mit einer Preßkraft von 100 kN (entsprechend einem spezifischen Preßdruck von 24,5 MPa) bei einer Temperatur von 2125°C 2 Stunden lang heißgepreßt und danach langsam auf Raumtemperatur abgekühlt.

Die Bestimmung der Eigenschaften des Werkstoffs wurden, wie in Beispiel 1 beschrieben, durchgeführt. Die Ergebnisse sind in Tab. 2 und 3 wiedergegeben.

**Vergleichsbeispiel 2**

414 g Borcarbid-Pulver mit einer spezifischen Oberfläche von 15,5 $m^2/g$ (Tabelle 1), 481 g $TiB_2$-Pulver mit einer spezifischen Oberfläche von 2,5 $m^2/g$ (Tabelle 1) und 5,4 g amorphes Bor (Tabelle 1) wurden wie in Vergleichsbeispiel 1 gemahlen, getrocknet und heißgepreßt.

Die Bestimmung der Eigenschaften des Werkstoffs wurden, wie in Beispiel 1 beschrieben, durchgeführt. Die Ergebnisse sind in Tab. 2 und 3 wiedergegeben.

Tabelle 2

| Beispiel | ρ gesintert [g/cm³] | ρ HIP(HP) [g/cm³] | ρtheoret. [g/cm³] | $C_{frei}/B_{4.33}C$ [%] | $K_{IC}$ [MPa√m] | $\sigma_B$ gesintert [MPa] | $\sigma_B$ HIP [MPa] | HK 0.1 [daN/mm²] |
|---|---|---|---|---|---|---|---|---|
| Vgl. 1 | - | 2.89 | 2.90 | 0.04 | 3.0 | 309 | 372 | 3140 |
| Vgl. 2 | - | 3.27 | 3.27 | 0.87 | 3.5 | 320 | 390 | 3080 |
| 1 | 2.84 | 2.90 | 2.90 | 2.28 | 4.7 | 481 | 554 | 3110 |
| 2 | 3.22 | 3.26 | 3.27 | 7.34 | 6.2 | 593 | 726 | 2850 |
| 3 | 3.50 | 3.62 | 3.63 | 16.15 | 6.5 | 589 | 781 | 2750 |
| 4 | 3.79 | 3.92 | 3.93 | 36.60 | 6.8 | 557 | 740 | 2580 |
| 5 | 3.19 | 3.29 | 3.29 | 3.55 | 6.0 | 522 | 680 | 2910 |
| 6 | 3.21 | 3.29 | 3.30 | 2.78 | 5.4 | 488 | 638 | 2930 |
| 7 | 2.85 | 2.89 | 2.90 | 4.54 | 5.3 | 547 | 642 | 3090 |
| 8 | 2.82 | 2.89 | 2.90 | 6.17 | 5.7 | 536 | 650 | 3050 |
| 9 | 2.83 | 2.88 | 2.89 | 7.55 | 6.3 | 579 | 720 | 3010 |
| 10 | 3.20 | 3.28 | 3.29 | 3.53 | 5.8 | 554 | 694 | 2920 |

Tabelle 3:

| Beispiel | Ti [wt%] | B [wt%] | C [wt%] | O [wt%] | N [wt%] | Summe [wt%] | $TiB_2$ [wt%] | $B_{4.33}C$ [wt%] | $C_{frei}$ [wt%] | Summe [wt%] | $C_{frei}/B_{4.33}C$ [%] |
|---|---|---|---|---|---|---|---|---|---|---|---|
| Vgl. 1 | 21.8 | 63.1 | 13.68 | 0.18 | 0.22 | 98.98 | 30.16 | 66.91 | 0.03 | 97.10 | 0.04 |
| Vgl. 2 | 36.9 | 52.2 | 9.50 | 0.25 | 0.19 | 99.04 | 52.07 | 44.65 | 0.39 | 97.11 | 0.87 |
| 1 | 21.4 | 62.3 | 15.00 | 0.18 | 0.22 | 99.10 | 29.58 | 66.13 | 1.51 | 97.22 | 2.28 |
| 2 | 36.2 | 50.8 | 12.01 | 0.16 | 0.09 | 99.26 | 51.75 | 43.29 | 3.18 | 98.22 | 7.34 |
| 3 | 47.9 | 41.7 | 9.22 | 0.22 | 0.11 | 99.15 | 68.50 | 25.22 | 4.07 | 97.80 | 16.15 |
| 4 | 57.4 | 35.0 | 6.51 | 0.31 | 0.12 | 99.34 | 82.04 | 11.42 | 4.18 | 97.64 | 36.60 |
| 5 | 36.3 | 52.3 | 10.81 | 0.16 | 0.02 | 99.59 | 52.24 | 45.12 | 1.60 | 98.96 | 3.55 |
| 6 | 36.3 | 52.3 | 10.46 | 0.18 | 0.01 | 99.25 | 52.25 | 45.12 | 1.25 | 98.62 | 2.78 |
| 7 | 20.9 | 60.8 | 16.10 | 0.18 | 0.22 | 98.20 | 28.85 | 64.53 | 2.93 | 96.32 | 4.54 |
| 8 | 20.4 | 60.9 | 17.26 | 0.15 | 0.11 | 98.82 | 28.74 | 64.94 | 4.01 | 97.69 | 6.17 |
| 9 | 20.9 | 60.6 | 17.97 | 0.15 | 0.09 | 99.71 | 29.56 | 64.28 | 4.85 | 98.70 | 7.55 |
| 10 | 36.3 | 52.3 | 10.80 | 0.15 | 0.01 | 99.56 | 52.31 | 45.12 | 1.59 | 99.02 | 3.53 |

## Patentansprüche

1. Verbundwerkstoff enthaltend Borcarbid und Titandiborid in einem Volumenverhältnis $B_4C/TiB_2$ von 90:10 bis 10:90 Teilen und einen Anteil an elementarem Kohlenstoff größer 3,2 Gew.% bis maximal 50 Gew.% bezogen auf den Borcarbidanteil,
dadurch gekennzeichnet, daß er folgende Eigenschaften besitzt:
Dichte größer 92% TD;
Härte HK 0,1 größer 2300;
4-punkt-Biegefestigkeit größer 400 MPa Bruchzähigkeit größer 3,5 MPa√m (gemessen nach der Brückenmethode).

2. Verbundwerkstoff gemäß Anspruch 1, dadurch gekennzeichnet, daß er folgende Eigenschaften besitzt:
Dichte größer 98% TD;
Härte HK 0,1 größer 2500;
4-Punkt-Biegefestigkeit größer 500 MPa Bruchzähigkeit größer 3,5 MPa√m (gemessen nach der Brückenmethode).

3. Verfahren zur Herstellung von Verbundwerkstoffen, dadurch gekennzeichnet, daß

   (1) feinteilige Pulver aus Borcarbid und Titandiborid im Volumenverhältnis $B_4C/TiB_2$ von 90:10 bis 10:90 Teilen mit einem Kohlenstoff enthaltenden Zusatz in Form von feinteiligem Kohlenstoff und/oder einem bei Temperaturen bis 1200°C unter Bildung von Kohlenstoff verkokbaren, organischen Material und/oder Titancarbid homogen vermischt werden,
   (2) diese Mischung zu Grünkörpern einer Dichte von mindestens 50% TD geformt wird,
   (3) ggf. je nach dem eingesetzten, Kohlenstoff enthaltenden Zusatz der so gebildete Grünling zur Erzeugung des freien Kohlenstoffs erhitzt wird,
   (4) der so behandelte Grünkörper unter Ausschluß von Sauerstoff bei Temperaturen von 2100 bis 2250°C zu Körpern mit einer Dichte von mindestens 92% TD drucklos gesintert wird.

4. Verfahren gemäß Anspruch 3, dadurch gekennzeichnet, daß als Kohlenstoff enthaltender Zusatz Ruß oder koloidaler Kohlenstoff eingesetzt wird und Schritt (3) entfällt.

5. Verfahren gemäß Anspruch 3, dadurch gekennzeichnet, daß als Kohlenstoff enthaltender Zusatz Kohlenstoff in organisch gebundener Form eingesetzt wird und in Schritt (3) der Grünkörper unter Luftabschluß auf Temperaturen bis zu 1200°C erhitzt wird.

6. Verfahren gemäß Anspruch 3, dadurch gekennzeichnet, daß als Kohlenstoff enthaltender Zusatz Titancarbid eingesetzt wird, und in Schritt (3) der Grünkörper unter Luftabschluß auf Temperaturen zwischen 1000 und 1500°C erhitzt wird.

7. Verfahren gemäß Anspruch 3, dadurch gekennzeichnet, daß der im Anschluß an Schritt 4 erhaltene Sinterkörper hüllenlos bei Temperaturen bis zu 2150°C unter einem Gasdruck von 5 bis 200 MPa nachverdichtet wird.

8. Verwendung der Verbundwerkstoffe gemäß einem oder mehreren der Ansprüche 1 bis 2 zur Herstellung von verschleißfesten Bauteilen oder Schneidwerkzeugen.

## Claims

1. Composite material comprising boron carbide and titanium diboride in a volume ratio $B_4C/TiB_2$ of from 90:10 to 10:90 parts and a proportion of elemental carbon of greater than 3.2% by weight up to a maximum of 50% by weight based on the boron carbide content, characterized in that it has the following properties:
density greater than 92% TD;
hardness HK 0.1 greater than 2300;
4-point flexural strength greater than 400 MPa, fracture toughness greater than 3.5 MPa√m (measured by the bridge method).

2. Composite material according to Claim 1, characterized in that it has the following properties:
density greater than 98% TD;
hardness HK 0.1 greater than 2500;

4-point flexural strength greater than 500 MPa, fracture toughness greater than 3.5 MPa√m (measured by the bridge method).

3. Process for producing composite materials according to Claim 1, characterized in that

(1) finely divided powders of boron carbide and titanium diboride in a volume ratio $B_4C/TiB_2$ of from 90:10 to 10:90 parts are homogeneously mixed with a carbon-containing additive in the form of finely divided carbon and/or an organic material which can be carbonized at temperatures up to 1200°C with formation of carbon, and/or titanium carbide,
(2) this mixture is shaped into green bodies of a density of at least 50% TD,
(3) if desired, depending on the carbon-containing additive used, the green body thus formed is heated to produce the free carbon, and
(4) the green body thus treated is pressureless-sintered with exclusion of oxygen at temperatures of from 2100 to 2250°C to give bodies having a density of at least 92% TD.

4. Process according to Claim 3, characterized in that the carbon-containing additive used is carbon black or colloidal carbon and step (3) is omitted.

5. Process according to Claim 3, characterized in that the carbon-containing additive used is carbon in organically bound form and in step (3) the green body is heated with exclusion of air to temperatures of up to 1200°C.

6. Process according to Claim 3, characterized in that the carbon-containing additive used is titanium carbide and in step (3) the green body is heated with exclusion of air to temperatures between 1000 and 1500°C.

7. Process according to Claim 3, characterized in that the sintered body obtained after step (4) is further densified without encapsulation at temperatures of up to 2150°C under a gas pressure of from 5 to 200 MPa.

8. Use of the composite materials according to one or more of Claims 1 to 2 for producing wear-resistant components or cutting tools.

**Revendications**

1. Composite contenant du carbure de bore et du diborure de titane dans un rapport volumétrique $B_4C/TiB_2$ en parts de 90:10 à 10:90, et une proportion en carbone élémentaire supérieure à 3,2 % en poids jusqu'à, au maximum, 50 % en poids, par rapport à la proportion de carbure de bore,
caractérisé en ce qu'il possède les propriétés suivantes:
densité supérieure à 92 % de la densité théorique;
dureté HK 0,1 supérieure à 2300;
résistance à la flexion sur 4 points supérieure à 400 MPa;
ténacité à la rupture supérieure à 3,5 MPa/m (mesurée conformément à la méthode de compensation).

2. Composite selon la revendication 1, caractérisé en ce qu'il possède les propriétés suivantes:
densité supérieure à 98 % de la densité théorique;
dureté HK 0,1 supérieure à 2500;
résistance à la flexion sur 4 points supérieur à 500 MPa;
ténacité à la rupture supérieure à 3,5 MPa/m (mesurée conformément à la méthode de compensation).

3. Procédé de fabrication de composites, caractérisé

(1) en ce que l'on mélange, de manière homogène, de la poudre finement divisée de carbure de bore et de diborure de titane dans le rapport volumétrique $B_4C/TiB_2$ en parts de 90:10 à 10:90, avec une addition contenant du carbone sous la forme de carbone finement divisé et/ou d'un matériau organique cokéfiable avec formation de carbone à des températures allant jusqu'à 1 200° C et/ou de carbure de titane,
(2) en ce que l'on reforme ce mélange pour former des compacts verts d'une densité d'au moins [illisible],
(3) en ce que l'on chauffe, le cas échéant, l'addition utilisée, selon le cas, contenant du carbone [illisible], du compact vert formé pour la génération de carbone libre,
(4) en ce que l'on fritte, en l'absence de pression, le compact vert ainsi traité en excluant l'oxygène à des températures de 2 100 à 2 250° C pour former des corps ayant une densité égale à au moins 92 % de la densité théorique.

4. Procédé selon la revendication 3, caractérisé en ce que l'on utilise, en tant qu'addition contenant du carbone, du noir de fumée ou du carbone colloïdal, et en ce que l'étape (3) est superflue.

5. Procédé selon la revendication 3, caractérisé en ce que l'on utilise, en tant qu'addition contenant du carbone, du carbone sous une forme liée organiquement, et en ce que l'on chauffe, dans l'étape (3), le compact vert en l'absence d'air à des températures allant jusqu'à 1 200° C.

6. Procédé selon la revendication 3, caractérisé en ce que l'on utilise, en tant qu'addition contenant du carbone, du carbure de titane, et en ce que, dans l'étape (3), l'on chauffe le compact vert en l'absence d'air à des températures comprises entre 1 000 et 1 500° C.

7. Procédé selon la revendication 3, caractérisé en ce que l'on procède à la recompression du corps de frittage obtenu à la suite de l'étape 4, sans enveloppe, à des températures allant jusqu'à 2 150° C sous une pression de gaz de 5 à 200 MPa.

8. Utilisation des composites selon l'une quelconque des revendications 1 à 2 en vue de la fabrication de pièces de construction ou d'outils de coupe résistants à l'usure.